**Europäisches Patentamt**

(19) **European Patent Office**

**Office européen des brevets**

(11) Veröffentlichungsnummer: **0 132 673**

**B1**

(12) # EUROPÄISCHE PATENTSCHRIFT

(45) Veröffentlichungstag der Patentschrift:
16.03.88

(51) Int. Cl.⁴: **F 16 L  37/08**

(21) Anmeldenummer: **84107988.2**

(22) Anmeldetag: **07.07.84**

(54) **Verbindungsvorrichtung für Druckleitungen.**

(30) Priorität: **02.08.83  DE 3327784**

(43) Veröffentlichungstag der Anmeldung:
**13.02.85 Patentblatt 85/7**

(45) Bekanntmachung des Hinweises auf die Patenterteilung:
**16.03.88 Patentblatt 88/11**

(84) Benannte Vertragsstaaten:
**DE FR GB IT NL SE**

(56) Entgegenhaltungen:
**DE-A-2 953 463**
**DE-B-2 734 117**
**DE-U-8 205 016**
**US-A-2 468 847**
**US-A-2 468 848**
**US-A-3 672 708**

(73) Patentinhaber: **Armaturenfabrik Hermann Voss GmbH & Co., D-5272 Wipperfürth (DE)**

(72) Erfinder: **Voss, Hans Hermann, Dipl.- Ing., Dohrgaul 74, D-5272 Wipperfürth (DE)**

(74) Vertreter: **Patentanwälte Dr. Solf & Zapf, Schlossbleiche 20 Postfach 13 01 13, D-5600 Wuppertal 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft eine Verbindungsvorrichtung für Druckleitungen, insbesondere in Bremssystemen, bestehend aus einem Gehäuseteil und einer in dieses einschraubbaren Überwurfschraube mit einer Durchgangsbohrung, in der ein Stecker mit seinem Steckerschaft dichtend einsteckbar ist und mittels eines an der Überwurfschraube in einer Nut befestigten, in seiner Öffnungsweite elastisch veränderbaren Halterings lösbar arretiert ist, wozu der Haltering in eine Umfangsnut des Steckerschaftes eingreifende Rastzungen aufweist, und ein spielfreier Sitz des Halterings in der Umfangsnut vorhanden ist.

Eine derartige Verbindungsvorrichtung ist aus dem DE-U-82 05 016 bekannt. Bei dieser Verbindungsvorrichtung ist ein Federelement aus einem gummielastischen Dichtungsring vorhanden, das außerhalb der Durchgangsbohrung oberhalb des Gehäuseteils zwischen diesem und einer Schulter des Steckers angeordnet ist. Die Aufgabe des Federelementes ist, eine spielfreie Fixierung der Rastzungen im Steckerzapfen herzustellen. Diese Anordnung erhöht jedoch die Baulänge der Verbindungsvorrichtung, was aber in vielen Fällen aus Platzgründen unerwünscht ist, und darüber hinaus besteht die Gefahr einer Beschädigung, da dieses Federelement nicht vollständig nach außen hin eingeschlossen ist.

Der vorliegenden Erfindung liegt die Aufgabe zugrunde, die bekannte Verbindungsvorrichtung derart zu verbessern, daß eine Verkürzung der Baulänge der Verbindungsvorrichtung möglich ist und zudem das separate Federelement vermieden wird, ohne die Spielfreiheit der Verbindung aufzugeben.

Erfindungsgemäß wird dies dadurch erreicht, daß der spielfreie Sitz durch mindestens zwei einander gegenüberliegende Haltezungen erzeugt wird, die am Haltering in Einsteckrichtung vor den Rastzungen ausgebildet sind und im eingesteckten Zustand des Steckerschaftes die Haltezungen und die Rastzungen in die Umfangsnut hineinragen und gegen deren in Einsteckrichtung gesehen hintere und vordere Nutwand unter Krafteinwirkung anliegen. Hierbei kann es erfindungsgemäß vorteilhaft sein, wenn die Haltezungen selbst federelastisch ausgebildet sind und der Abstand der voneinander abgewandten Flächen der Haltezungen und Rastzungen im nicht eingesteckten Zustand des Steckers größer ist als die Breite der Umfangsnut des Steckerschaftes.

Damit liegt die Erfindung in der Maßnahme, dem Haltering gleichzeitig auch die Funktion einer eine axiale Vorspannung in der Verbindungsvorrichtung erzeugenden Feder zu geben. Hierdurch kann die Baulänge der erfindungsgemäßen Verbindungsvorrichtung wesentlich verkürzt werden, und darüber hinaus befindet sich das Federelement an einer Stelle in der Verbindungsvorrichtung, wo es vor äußeren Einflüssen und somit vor Beschädigungen und Verschmutzungen geschützt ist. Ebenso kann es erfindungsgemäß vorteilhaft sein, wenn die Rastzungen starr am Haltering ausgebildet sind und der Abstand der voneinander abgewandten Flächen der Haltezungen und Rastzungen im nicht eingesteckten Zustand des Steckers gleich der Breite der Umfangsnut des Steckerschaftes ist. Hierbei wird die Spielfreiheit durch den Formschluß der Zungen innerhalb der Umfangsnut erreicht. Durch die Erfindung ergibt sich die Möglichkeit, die Dichtung zwischen dem Steckerschaft und der Überwurfschraube an eine Stelle zu legen, die ebenfalls nach außen hin abgeschlossen ist, ohne daß sich aufgrund dieser Anordnung die Notwendigkeit ergibt, ein zusätzliches Federelement vorzusehen, da gemäß der Erfindung der spielfreie Sitz ohne ein separates Federelement erreicht wird.

Weitere vorteilhafte Ausführungsformen der Erfindung sind in den Unteransprüchen enthalten.

Anhand der in den beiliegenden Zeichnungen dargestellten Ausführungsbeispiele wird die Erfindung nun näher erläutert. Es zeigen:

Fig. 1 einen Schnitt durch eine erfindungsgemäße Verbindungsvorrichtung,

Fig. 2 eine Seitenansicht eines erfindungsgemäßen Halterings der Verbindungsvorrichtung gemäß Fig. 1, zum Teil geschnitten,

Fig. 3 eine Ansicht von unten auf den Haltering gemäß Fig. 2,

Fig. 4 eine perspektivische Ansicht des Halterings gemäß Fig. 2,

Fig. 5 einen Schnitt durch eine Hälfte einer weiteren Ausführungsform einer erfindungsgemäßen Verbindungsvorrichtung,

Fig. 6 einen Schnitt durch eine Hälfte einer weiteren Ausführungsform einer erfindungsgemäßen Verbindungsvorrichtung,

Fig. 7 eine Seitenansicht, zum Teil geschnitten, des Halterings gemäß Fig. 5,

Fig. 8 eine Unteransicht des Halterings gemäß Fig. 7,

Fig. 9 eine perspektivische Ansicht des Halterings gemäß Fig. 6,

Fig.10 eine Seitenansicht des Halterings gemäß Fig. 9, zum Teil geschnitten,

Fig.11 eine Unteransicht des Halterings gemäß Fig. 9.

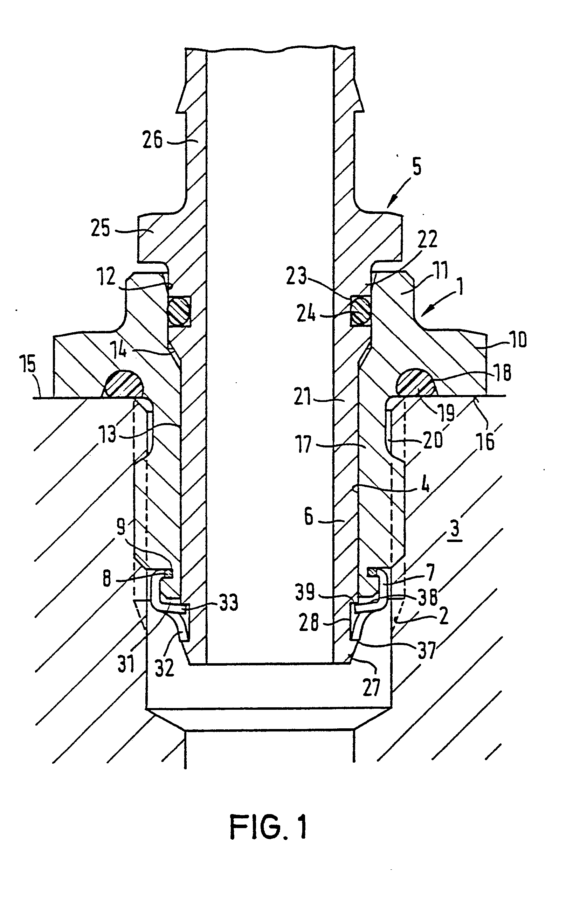

Wie sich aus Fig. 1 ergibt, besteht eine erfindungsgemäße Verbindungsvorrichtung aus einer Überwurfschraube 1, die in eine Gewindebohrung 2 eines Gehäuses 3, z. B. eines Ventilgehäuses, eingeschraubt ist. Die Überwurfschraube 1 weist eine Durchgangsbohrung 4 auf, in die ein Stecker 5 mit seinem Steckerschart 6 eingesteckt ist. In der dargestellten eingesteckten Stellung wird der Stecker 5 durch einen Haltering 7 innerhalb der Durchgangsbohrung 4 arretiert. Der Haltering 7 ist am Einschraubende der Überwurfschraube 1 mit einem Ringbund 8 in einer Außennut 9 der Überwurfschraube gelagert. Die Überwurfschraube 1 weist einen Schraubenkopf 10 auf, der als Sechskant ausgeführt sein kann, und besitzt in Verlängerung des Kopfes 10 einen zylindrischen Ansatz 11. Dabei weist der Ansatz 11 einen Bohrungsabschnitt 12 mit größerem Innendurchmesser auf als der Innendurchmesser des Bohrungsabschnittes 13 der Überwurfschraube, der sich in Einsteckrichtung gesehen an den Bohrungsabschnitt 12 anschließt. Zwischen dem Bohrungsabschnitt 12 und dem Bohrungsabschnitt 13 befindet sich eine umlaufende Abschrägung 14. Der Kopf 10 weist eine der Kopffläche 15 des Gehäuses 3 zugekehrte Anlagefläche 16 auf, in der sich eine zum Gewindestutzen 17 der Überwurfschraube 1 konzentrische Nut 18 zur Aufnahme eines Dichtringes 19 befindet. Dieser Dichtring 19 dient zum Abdichten des Spaltbereichs zwischen dem Schraubenkopf 10 und dem Gehäuse 3 im eingeschraubten Zustand der Überwurfschraube 1. Im Übergangsbereich zwischen dem Kopf 10 und dem Gewindebereich des Gewindestutzens 17 weist dieser eine umlaufende Hinterdrehung 20 auf. Der Steckerschaft 6 besitzt eine der Durchgangsbohrung 4 mit ihren Bohrungsabschnitten 12, 13, 14 angepaßte Außenkontur, so daß er einen vorderen Abschnitt 21 und einen sich anschließenden, im Durchmesser gegenüber diesem größeren Abschnitt 22 besitzt, wobei in diesem eine Ringnut 23 mit einem Dichtring 24 angeordnet ist, die zur Abdichtung des Spaltbereichs zwischen dem Steckerschaft und der Überwurfschraube dient. Es können jedoch auch mehrere Dichtringe vorgesehen sein. An den Abschnitt 22 legt sich ein Ringbund 25 an und an diesen ein Anschlußdorn 26 für eine auf diesen aufzuschiebende, nicht dargestellte Rohrleitung.

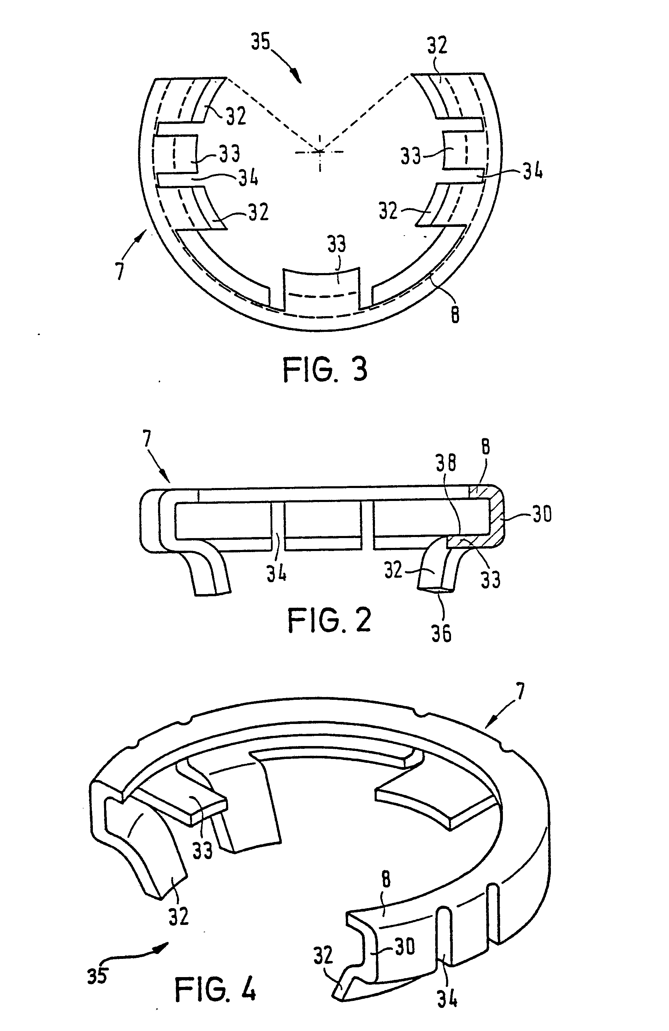

Am Anfang des Steckerschaftes 6 weist dieser eine Anfasung 27 auf, an die sich eine Umfangsnut 28 in Richtung auf den Anschlußdorn anschließt. In diese Umfangsnut greift der Haltering 7 ein, wodurch die Fixierung des Steckers 5 innerhalb des Gehäuses 3 erreicht wird. Wie sich in Verbindung mit den Fig. 2 bis 4 ergibt, weist der Haltering 7 den Ringbund 8 auf, von dessen Außenkante aus sich ein zylindrischer Ringteil 30 etwa in einem rechten Winkel zur Öffnungsebene des Halterings erstreckt, so daß im eingesetzten Zustand dieser Ringteil 30 die Stirnfläche 31 der Überwurfschraube 1 überragt. Am freien Ende des Ringteils 30 sind elastisch verbiegbare Rastzungen 32 angeordnet, die schräg zur Längsachse der Überwurfschraube auf diese zu im Sinne einer Durchmesserverengung des Ringes verlaufen. Weiterhin weist der Haltering - ausgehend vom freien Ende des Ringteils 30 - federelastische Haltezungen 33 auf, die etwa parallel zum Ringbund verlaufen und - in Einsteckrichtung gesehen - vor den Rastzungen 32 liegen. Dabei sind die Zungen 32, 33 derart bemessen, daß sie jeweils eine Durchtrittsöffnung umschließen, deren Durchmesser kleiner ist als der Außendurchmesser des Steckerschaftes 6. Der Ringbund 8 bildet keinen geschlossenen Ring, sondern umfaßt etwa einen Umfangswinkel von ca. 260°, so daß sich eine seitliche Öffnung 35 ergibt, die einem Winkelbogen von ca. 100° entspricht. Der Haltering 7 ist aus federelastischem Material, so daß er auch im Bereich des Ringbund 8 im Sinne einer Vergrößerung der Öffnung 35 aufweitbar ist, jedoch nach einem Aufweiten in die ursprüngliche Lage zurückfedert. Die Öffnung 35 ist derart dimensioniert, daß der Haltering 7 auf die Überwurfschraube 1 im Bereich der Umfangsnut 9 seitlich aufgeschoben werden kann und anschließend in der Ringnut 9 gehalten wird. Der Innendurchmesser des Ringteils 30 ist größer als der Außendurchmesser des sich an die Ringnut 9 anschließenden Bereichs der Überwurfschraube 1, und der Außendurchmesser des Ringteils 30 ist kleiner als der Innendurchmesser der Gewindebohrung 2 des Gehäuses 3, so daß im eingeschraubten Zustand der Überwurfschraube 1 der Haltering mit geringem radialen Spiel zwischen Einschraubmutter und Gehäuse sitzt, wobei die Wandung der Gewindebohrung 2 eine mögliche Aufweitung desselben begrenzt.

Die beiden Zungen 32, 33 liegen mit ihren Enden nach dem Einstecken des Steckers 5 in das Gehäuse 3 innerhalb der Umfangsnut 28, und zwar derart, daß die Rastzungen 32 mit ihren Endflächen 36 an der in Einsteckrichtung vorderen radialen Begrenzungswand 37 der Umfangsnut 28 anliegen und die Haltezungen 33 mit ihrer dem Ringbund 8 zugewandten Fläche 38 an der in Einsteckrichtung hinteren radialen Begrenzungswand 39 der Umfangsnut 28 anliegen. Dabei ist der Abstand zwischen der Endfläche 36 und der Fläche 38 der Zungen im nicht eingesteckten Zustand größer als die Breite der Umfangsnut 28, so daß durch die beim Einstecken federelastisch verformten Zungen 33 eine axial gegen die Einsteckrichtung gerichtete Kraft erzeugt wird, so daß der Stecker 5 in der Überwurfschraube mit axialer Vorspannung sitzt, so daß ein in axialer Richtung spielfreier Sitz in der Ringnut 28 gegeben ist.

Der Haltering 7 kann als Kunststoffspritzteil oder Metallstanzteil bzw. Biegeteil ausgebildet sein.

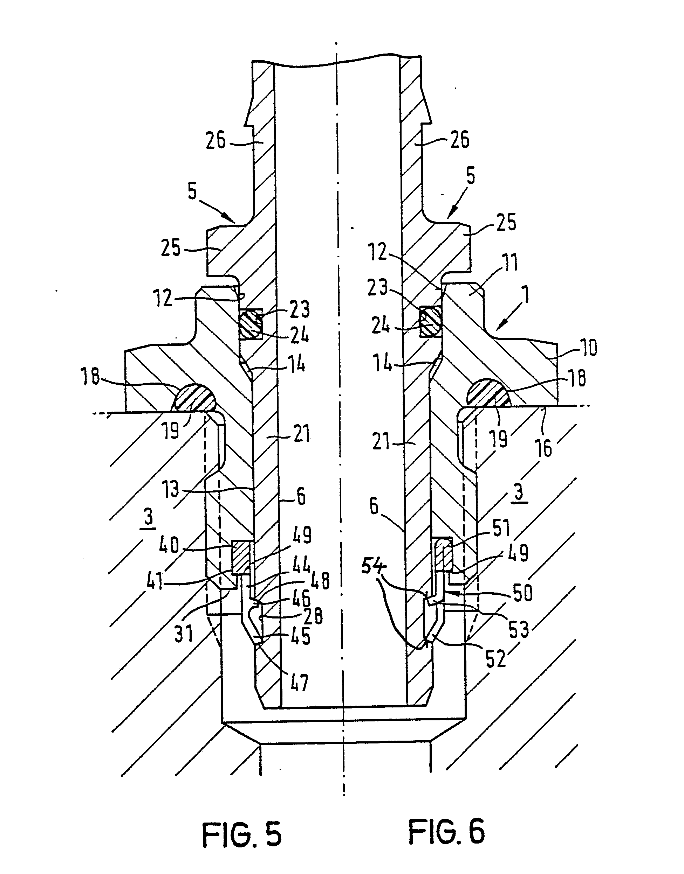

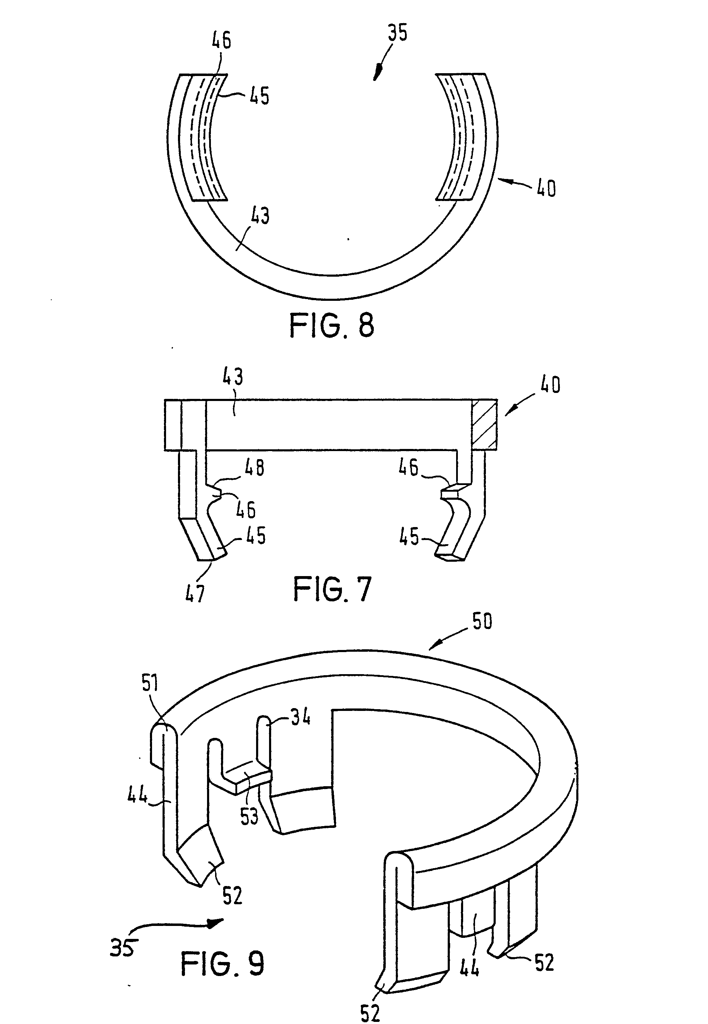

In den Fig. 5, 7 und 8 ist eine weitere Ausführungsform einer erfindungsgemäßen Vorrichtung dargestellt, wobei gleiche Teile wie in den Fig. 1 bis 4 mit denselben Bezugsziffern versehen sind. Diese Ausführungsform unterscheidet sich im wesentlichen durch eine veränderte Ausgestaltung der Umfangsnut des Halterings und der Anordnung desselben an der Überwurfschraube. Der Haltering 40 ist hierbei in einer Ringnut 41 in der Innenwandung 42 der Überwurfschraube 1 angeordnet, die im Bereich vor der Stirnfläche 31 der Überwurfschraube vorhanden ist. Der Haltering 40 weist wiederum einen Ringbund 43 auf, an dem einseitig einander gegenüberliegend zwei federelastische Arme 44 angeformt sind. Diese Arme 44 besitzen an ihren freien Enden Rastzungen 45, die schräg zur Längsachse des Halterings im Sinne einer Durchmesserverringerung der Ringöffnung verlaufen. In Einsteckrichtung vor den Rastzungen 45 sind an den Armen 44 Haltezungen 46 angeformt. Der Steckerzapfen weist die Umfangsnut 28 auf, in der die Zungen 45, 46 im eingesteckten Zustand des Steckers formschlüssig sitzen. Dabei besitzt die Nut ein im Querschnitt trapezförmiges Profil, wodurch das Erreichen eines spielfreien Sitzes des Halteringes mit den Haltezungen und Rastzungen erleichtert wird. Aufgrund der Trapezform des Nutquerschnitts ergibt sich ein Verlauf der Nutseitenwände 54 schräg zur Längsachse des Steckerschaftes, weshalb die zugeordneten Anlageflächen der Zungen 45, 46 ebenfalls korrespondierend abgeschrägt sind, was für die Endflächen 47 der Rastzungen 45 und für die zu dieser abgewandten Seitenfläche 48 der Haltezungen 46 gilt. Hierbei erfolgt keine elastische Verformung der Haltezungen 46. Der Abstand der Endflächen 47 und der Seitenfläche 48 entspricht vor dem Einstecken der Weite der trapezförmigen Umfangsnut 28, so daß nach dem Einstecken durch Formschluß der spielfreie Sitz vorhanden ist. Der Steckerschaft 6 des Steckers 5 ist in Abänderung zu der Ausführungsform gemäß Fig. 1 nach unten verlängert, was deshalb zweckmäßig ist, damit der innen in der Überwurfschraube 1 aufgeknüpfte Haltering 40 leichter demontiert werden kann. Der dargestellte Haltering 40 kann als Kunststoffspritzteil oder aber als Metallring ausgebildet sein.

Was die Bemessung der Zungen 45, 46 betrifft, insbesondere in bezug auf die Zusammenwirkung mit der Nut 28, so kann hier in vollem Umfange auf die Ausgestaltung gemäß der Fig. 1 verwiesen werden, wie im übrigen auch gleiche Teile wie in den vorhergehenden Figuren mit denselben Bezugsziffern versehen sind.

Weiterhin ist festzustellen, daß die Arme 44 am Ringteil 43 gegen dessen äußere Umfangsfläche nach innen versetzt ausgebildet sind, so daß sich dort eine Ringstufe bildet, weshalb die Arme eine geringere Wandstärke als der Ringteil 43 besitzen, so daß sich hier eine Flexibilität bei ausreichender Festigkeit der Arme einstellt. Auch der Haltering 40 weist eine seitliche Öffnung 35 auf, die etwa einen Öffnungswinkel von 100 besitzt, so daß der Haltering für die Anordnung in der Nut 41 im zusammengedrückten Zustand in die Nut eingebracht werden kann und sich dann nach dem Loslassen dort wieder aufweiten und an den Nutgrund anlegen kann. Die Arme 44 besitzen vorzugsweise eine Breite von etwa 1/9 bis 1/10 des Umfanges des Halterings.

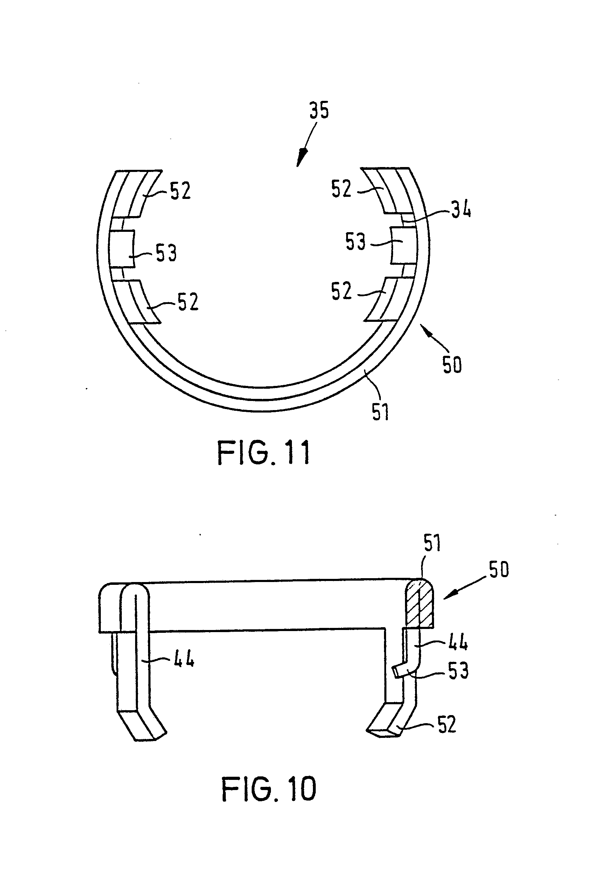

In den Fig. 6, 9, 10 und 11 ist eine Ausführungsform einer erfindungsgemäßen Vorrichtung dargestellt, die sich von der in den Fig. 5, 7 und 8 dadurch unterscheidet, daß der Haltering 50 als spanloses; insbesondere durchBiegen verformtes Metallteil hergestellt ist.

Hierbei ergibt sich der Ringbund 51 als doppelwandiges Bördelteil, und die beiden Zungen 52, 53 liegen nicht, wie bei der Ausführungsform gemäß Fig. 5 gleichachsig übereinander, sondern sind gegeneinander seitlich versetzt und durch Schlitze 34 voneinander getrennt, so daß sie separate, am Ringteil angeformte Teile darstellen. Hierbei sind jeweils einander gegenüberliegend zwei Paare von Rastzungen 52 vorgesehen, und zwischen den Rastzungen 52 jedes Paares ist eine Haltezunge 53 angeordnet. Die Gestalt und Dimensionierung des Halterings 50 entspricht im wesentlichen dem Haltering 40. Das gleiche gilt auch für die Ausführung des Steckers, insbesondere die Ausgestaltung der Ringnut 41 zur Aufnahme des Halterings und der Umfangsnut 28 zur Aufnahme der Zungen 52, 53. Im übrigen sind gleiche Teile wie in den vorhergehenden Ausführungsformen mit denselben Bezugsziffern versehen.

Der Öffnungsdurchmesser der Halteringe 40, 50 ist größer gleich dem Durchmesser der Durchgangsbohrung 4 der Überwurfschraube 1, so daß die den Ringteil 43 bzw. 51 aufnehmende Ringnut 41 eine Nuttiefe besitzt, die mindestens der Breite des Ringteils entspricht. Um ein leichteres Einsetzen bzw. Herausnehmen des Halterings aus der Ringnut 41 zu erreichen, ist die der Stirnfläche 31 zugekehrte seitliche Nutwand 49 der Ringnut 41 in ihrer Höhe gegenüber der gegenüberliegenden Nutwand reduziert, so daß sich auch ein freier Durchtritt der Arme 44 ergibt und genügend Spiel für eine Aufweitung der Arme vorhanden ist.

## Patentansprüche

1. Verbindungsvorrichtung für Druckleitungen, insbesondere in Bremssystemen, bestehend aus einem Gehäuseteil (3) und einer in dieses einschraubbaren Überwurfschraube (1) mit einer Durchgangsbohrung (4), in der ein Stecker (5) mit seinem Steckerschaft (6) dichtend einsteckbar ist und mittels eines an der Überwurfschraube (1) in einer Nut (9, 41) befestigten, in seiner Öffnungsweite elastisch veränderbaren Haltering (7, 40, 50) lösbar arretiert ist, wozu der Haltering (7, 40, 50) in eine Umfangsnut (28) des Steckerschaftes (6) eingreifende Rastzungen aufweist und ein spielfreier Sitz des Halterings (7, 40, 50) in der Umfangsnut (28) vorhanden ist, dadurch gekennzeichnet, da der spielfreie Sitz durch mindestens zwei einander gegenüberliegende Haltezungen (33, 46, 53) erzeugt wird, die am Haltering (7, 40, 50) in Einsteckrichtung vor den Rastzungen (32, 45, 52) ausgebildet sind, und im eingesteckten Zustand des Steckerschaftes (6) die Haltezungen und die Rastzungen in die Umfangsnut (28) hineinragen und gegen deren gegenüberliegende Seitenwände (37, 39, 54) unter Krafteinwirkung anliegen.

2. Vorrichtung nach Anspruch 1, dadurch gekennzeichnet, daß der Abstand der Rastzungen (32) und der federelastischen Haltezungen (33) zwischen ihren voneinander abgekehrten Anlageflächen (36, 38) im nicht eingesteckten Zustand des Steckers (5) größer ist als die Breite der Umfangsnut (28) des Steckerschaftes (6).

3. Vorrichtung nach Anspruch 1, dadurch gekennzeichnet, daß die Haltezungen (46, 53) starr ausgebildet sind und der Abstand der Rastzungen (45, 52) und der Haltezungen (46, 53) an ihren voneinander abgewandten Flächen (47, 48) im nicht eingesteckten Zustand des Steckers gleich der Breite der Umfangsnut (28) des Steckerschaftes (6) ist.

4. Vorrichtung nach einem oder mehreren der Ansprüche 1 bis 3, dadurch gekennzeichnet, daß der Haltering (7) mit einem Ringbund (8) in einer Ringnut (9) in der Außenwandung der Überwurfschraube (1) angeordnet ist und die an einem zylindrischen Ringteil (30) des Halteringes (7) angeformten Rast- und Haltezungen (32, 33) die Überwurfschraube (1) an ihrer Stirnfläche (31) übergreifen.

5. Vorrichtung nach einem oder mehreren der Ansprüche 1 bis 3, dadurch gekennzeichnet, daß der Haltering (40, 50) mit seinem Ringbund (43, 51) in einer Ringnut (41) in der Innenwandung (42) der Überwurfschraube (1) angeordnet ist.

6. Vorrichtung nach Anspruch 5, dadurch gekennzeichnet, daß sich vom Ringbund (43, 51) aus mindestens zwei einander gegenüberliegende Arme (44) parallel zur Längsachse der Vorrichtung erstrecken, die die Stirnfläche (31) der Überwurfschraube (1) überragen und an deren freien Enden hintereinander die Rast- und Haltezungen (45, 52, 46, 53) ausgebildet sind.

7. Vorrichtung nach Anspruch 6, dadurch gekennzeichnet, daß die Arme (44) an dem Ringbund (43, 51) derart radial nach innen versetzt angeordnet sind, daß sich im Übergangsbereich eine radiale Stufe befindet.

8. Vorrichtung nach einem oder mehreren der Ansprüche 1 bis 7, dadurch gekennzeichnet, daß die Rastzungen (32, 45, 52) und Haltezungen (33, 46, 53) am Ringbund (8, 43, 51) nebeneinanderliegend durch Schlitze (34) getrennt ausgebildet sind.

9. Vorrichtung nach Anspruch 8, dadurch gekennzeichnet, daß jeweils zwei Rastzungenpaare einander gegenüberliegend angeordnet sind und zwischen den beiden Rastzungen (32, 52) jedes Paares eine Haltezunge (33, 53) liegt.

10. Vorrichtung nach Anspruch 9, dadurch gekennzeichnet, daß mittig zwischen den beiden Haltezungen (33) eine weitere Haltezunge angeordnet ist.

11. Vorrichtung nach einem oder mehreren der Ansprüche 1 bis 10, dadurch gekennzeichnet, daß die Rastzungen (34, 45, 52) schräg zur Vorrichtungslängsachse auf diese zu verlaufen und die von ihnen bestimmte Öffnungsweite kleiner ist als der Durchmesser der Durchgangsbohrung (4) der Überwurfschraube (1).

12. Vorrichtung nach einem oder mehreren der Ansprüche 1 bis 11, dadurch gekennzeichnet, daß sich der Haltering (7, 40, 50) über einen Umfangswinkel von ca. 260° erstreckt, so daß eine radiale Öffnung (35) mit einer Öffnungsweite von ca. 100° gebildet ist.

13. Vorrichtung nach einem oder mehreren der Ansprüche 5 bis 12, dadurch gekennzeichnet, daß der Haltering (50) ein Metallbiegeteil ist und im Bereich des Ringbundes (51) als doppelwandiges Bördelteil ausgebildet ist.

14. Vorrichtung nach einem oder mehreren der Ansprüche 5 bis 12, dadurch gekennzeichnet, daß der Haltering (40) als Metallteil oder als Kunststoffspritzteil ausgebildet ist.

15. Vorrichtung nach einem oder mehreren der Ansprüche 5 bis 14, dadurch gekennzeichnet, daß die Umfangsnut (28) im Steckerschaft (6) zur Aufnahme der Rast- und Haltezungen (45, 52, 46, 53) im Querschnitt gesehen eine Trapezform aufweist und die Endflächen (47, 48) der Rastzungen und Haltezungen einen entsprechenden angepaßten Verlauf besitzen.

**Claims**

1. Coupling device for pressure pipes, in particular in brake systems, consisting of a housing part (3) and a cap screw (1), which can be screwed into the latter and has a through-bore (4), in which a connector (5) can be inserted in sealing manner by its connector shank (6) and is releasably arrested by means of a retaining ring (7, 40, 50), which is fixed on the cap screw (1) in a groove (9, 41) and is elastically variable in its opening width, for which arresting the retaining ring (7, 40, 50) has catch lugs engaging in a circumferential groove (28) of the connector shank (6) and there is a snug fit of the retaining ring (7, 40, 50) in the circumferential groove (28), characterized in that the snug fit is produced by at least two mutually opposite retention lugs (33, 46, 53), which are formed on the retaining ring (7, 40, 50) ahead of the catch lugs (32, 45, 52) in the insertion direction and, in the inserted state of the connector shank (6), protrude beyond the retention lugs and the catch lugs into the circumferential groove (28) and bear under a force effect against its opposite side walls (37, 39, 54).

2. Device according to Claim 1, characterized in that the spacing of the catch lugs (32) and the resiliently elastic retention lugs (33), between their mutually remote contact surfaces (36, 38), is greater in the non-inserted state of the connector (5) than the width of the circumferential groove (28) of the connector shank (6).

3. Device according to Claim 1, characterized in that the retention lugs (46, 53) are rigidly designed and the spacing of the catch lugs (45, 52) and of the retention lugs (46, 53), at their mutually remote surfaces (47, 48), is equal in the non-inserted state of the connector to the width of the circumferential groove (28) of the connector shank (6).

4. Device according to one or more of Claims 1 to 3, characterized in that the retaining ring (7) is arranged with an annular collar (8) in an annular groove (9) in the outer wall of the cap screw (1) and the catch and retention lugs (32, 33) integrally formed on a cylindrical annular part (30) of the retaining ring (7) overlap the cap screw (1) at its face (31).

5. Device according to one or more of Claims 1 to 3, characterized in that the retaining ring (40 50) is arranged with its annular collar (43, 51) in an annular groove (41) in the inner wall (42) of the cap screw (1).

6. Device according to Claim 5, characterized in that at least two mutually opposite arms (44) extend from the annular collar (43, 51) parallel to the longitudinal axis of the device, which arms project beyond the face (31) of the cap screw (1) and at the free ends of which the catch and retention lugs (45, 52, 46, 53) are formed after each other.

7. Device according to Claim 6, characterized in that the arms (44) are arranged on the annular collar (43, 51) offset radially inwards in such a way that there is a radial step in the transition region.

8. Device according to one or more of Claims 1 to 7, characterized in that the catch lugs (32, 45, 52) and retention lugs (33, 46, 53) are formed alongside each other on the annular collar (8, 43, 51), separated by slits (34).

9. Device according to Claim 8, characterized in that two catch lug pairs are in each case arranged opposite each other and a retention lug (33, 53) lies between the two catch lugs (32, 52) of each pair.

10. Device according to Claim 9, characterized in that midway between the two retention lugs (33) is arranged a further retention lug.

11. Device according to one or more of Claims 1 to 10, characterized in that the catch lugs (34, 45, 52) run towards the longitudinal axis of the device at an oblique angle to it and the opening determined by them is smaller than the width determined by the through-bore (4) of the cap screw (1).

12. Device according to one or more of Claims 1 to 11, characterized in that the retaining ring (7, 40, 50) extends over an angle at circumference of approximately 260°, so that a radial opening (35) having an opening width of approximately 100° is formed.

13. Device according to one or more of Claims 5 to 12, characterized in that the retaining ring (50) is a metal bending part and is designed as a double-walled beaded part in the region of the annular collar (51).

14. Device according to one or more of Claims 5 to 12, characterized in that the retaining ring (40) is designed as a metal part or as an injection-moulded plastics part.

15. Device according to one or more of Claims 5 to 14, characterized in that the circumferential groove (28) in the connector shank (6) for receiving the catch and retention lugs (45, 52, 46, 53) has, seen in crossection, a trapezoidal shape and the end surfaces (47, 48) of the catch lugs and retention lugs have a corresponding adapted profile.

## Revendications

1. Dispositif de raccordement pour conduits sous pression, en particulier dans des systèmes de freinage, comprenant un boîtier (3) et une vis chapeau (1) pouvant être vissée dans celui-ci, avec un alésage traversant (4) dans lequel peut être introduite de manière étanche une prise (5) avec sa tige (6) et être fixée de manière amovible au moyen d'une bague de maintien (7, 40, 50) fixée sur la vis chapeau (1) dans une rainure (9, 41) et dont l'ouverture peut être modifiée élastiquement, la bague de maintien (7, 40, 50) possédant à cet effet des languettes d'arrêt s'engageant dans une rainure circonférentielle (28) de la tige (6) de la prise, la bague de maintien (7, 40, 50) étant ainsi placée sans jeu dans ladite rainure (28),
caractérisé en ce que la disposition sans jeu est obtenue par au moins deux languettes de maintien (33, 46, 53) placées en regard, formées sur la bague de maintien (7, 40, 50) dans la direction d'enfichage en amont des languettes d'arrêt (32, 45, 52) et que lorsque la tige (6) de la prise est enfichée, les languettes de maintien et d'arrêt font saillie dans la rainure circonférentielle (28) et sont appliquées avec un certain effort contre des parois latérales (37, 39, 54) en regard.

2. Dispositif selon la revendication 1, caractérisé en ce que la distance des languettes d'arrêt (32) et des languettes élastiques de maintien (33) entre leurs surfaces d'appui (36, 38) opposées est plus grande que la largeur de la rainure circonférentielle (28) de la tige (6) de la prise (5) lorsque celle-ci n'est pas enfichée.

3. Dispositif selon la revendication 1, caractérisé en ce que les languettes de maintien (46, 53) sont rigides et que la distance des languettes d'arrêt (45, 52) et des languettes de maintien (46, 53) entre leurs surfaces opposées (47, 48) est égale à la largeur de la rainure circonférentielle (28) de la tige (6) de la prise lorsque la prise n'est pas enfichée.

4. Dispositif selon l'une ou plusieurs des revendications 1 à 3, caractérisé en ce qu'une collerette (8) de la bague de maintien (7) est disposée dans une bague annulaire (9) dans la paroi extérieure de la vis chapeau (1) et que les languettes d'arrêt et de maintien (32, 33) venues d'une pièce avec une portion cylindrique (30) de la bague de maintien (7) chevauchent la face frontale (31) de la vis chapeau (1).

5. Dispositif selon l'une ou plusieurs des revendications 1 à 3,

caractérisé en ce que la collerette (43, 51) de la bague de maintien (40, 50) est disposée dans une rainure circulaire (41) de la paroi intérieure (42) de la vis chapeau (1).

6. Dispositif selon la revendication 5,

caractérisé en ce qu'au moins deux bras (44) situés en regard s'étendent de la collerette (43, 51) de la bague parallèlement à l'axe longitudinal du dispositif, ces bras dépassant la face frontale (31) de la vis chapeau (1) et des languettes d'arrêt et de maintien (45, 52, 46, 53) étant formées aux extrémités libres de ces bras.

7. Dispositif selon la revendication 6,

caractérisé en ce que les bras (44) sont disposés sur la collerette (43, 51) radialement decalés vers l'intérieur de manière telle qu'un épaulement radial soit constitué dans la région de transition.

8. Dispositif selon l'une ou plusieurs des revendications 1 à 7,

caractérisé en ce que les languettes d'arrêt (32, 45, 52) et les languettes de maintien (33, 46, 53) sont formées sur la collerette situées côte à côte et separées par des fentes (34).

9. Dispositif selon la revendication 8,

caractérisé en ce que deux paires de languettes d'arrêt sont respectivement disposées en regard et qu'une languette de maintien (33, 53) est disposée entre les deux languettes d'arrêt (32, 52) de chaque paire.

10. Dispositif selon la revendication 9,

caractérisé en ce qu'une languette de maintien supplémentaire est disposée centralement entre les deux languettes de maintien (33).

11. Dispositif selon l'une ou plusieurs des revendications 1 à 10,

caractérisé en ce que les languettes d'arrêt (34, 45, 52) s'étendent obliquement par rapport à l'axe longitudinal du dispositif et vers celui-ci et que l'ouverture déterminée par lesdites languettes est plus petite que le diamètre de l'alésage traversant (4) de la vis chapeau (1).

12. Dispositif selon l'une ou plusieurs des revendications 1 à 11,

caractérisé en ce que la bague de maintien (7, 40, 50) s'étend sur un angle circonférentiel d'environ 260°, de manière à former une ouverture radiale (35) ayant une largeur d'environ 100°.

13. Dispositif selon l'une ou plusieurs des revendications 5 à 12,

caractérisé en ce que la bague de maintien (50) est une pièce métallique infléchie qui dans la région de la collerette (51), a la forme d'une portion rabattue à double paroi.

14. Dispositif selon l'une ou plusieurs des revendications 5 à 12,

caractérisé en ce que la bague de maintien (40) est une pièce métallique ou synthétique moulée par injection.

15. Dispositif selon l'une ou plusieurs des revendications 5 à 14,

caractérisé en ce que la rainure circonférientielle (28) dans la tige (6) de la prise qui accueille les languettes d'arrêt et de maintien (45, 52, 46, 53) a vue en coupe la forme d'un trapèze et que les faces terminales (47, 48) des languettes d'arrêt et de maintien ont une forme correspondante.

FIG. 1

FIG. 3

FIG. 2

FIG. 4

FIG. 5          FIG. 6

0 132 673

FIG. 8

FIG. 7

FIG. 9

7

FIG. 11

FIG. 10